# EUROPÄISCHE PATENTSCHRIFT

(11) **EP 1 900 476 B1**
(45) Veröffentlichungstag und Bekanntmachung des Hinweises auf die Patenterteilung: **29.04.2009**
(21) Anmeldenummer: 07017811.6
(22) Anmeldetag: 12.09.2007
(51) Int. Cl.: B23Q 11/08

(54) **Werkzeugmaschine mit einem Arbeitsraum**
Machine tool with a working chamber
Machine-outil dotée d'un espace de travail

(30) Priorität: 18.09.2006 DE 102006045851; 18.09.2006 DE 102006045733
(43) Veröffentlichungstag der Anmeldung: 19.03.2008
(60) Teilanmeldung: 09155015.2
(73) Patentinhaber: Chiron-Werke GmbH & Co. KG, 78532 Tuttlingen (DE)
(72) Erfinder: Prust, Dirk, Dr., 78532 Tuttlingen (DE); Winkler, Hans-Henning, Dr., 78532 Tuttlingen (DE)
(74) Vertreter: Otten, Hajo

(56) Entgegenhaltungen:
- EP-A- 1 350 595
- WO-A-01/38044
- DE-A1- 4 117 699
- DE-U1- 20 220 812
- US-A- 5 624 363

## Beschreibung

Die vorliegende Erfindung betrifft eine Werkzeugmaschine mit einem Arbeitsraum, in dem eine Vorrichtung zum Aufnehmen von zu bearbeitenden Werkstücken vorgesehen ist, mit einer Arbeitsspindel zur Bearbeitung von Werkstücken, und einem die Arbeitsspindel tragenden Ständer, der relativ zu der Vorrichtung in einer auf diese zu weisende Querrichtung verfahrbar ist, wobei der Arbeitsraum nach unten zumindest teilweise durch eine in der Querrichtung verschiebbare, bewegliche Abdeckung abgedeckt ist, die mit dem Ständer verbunden ist.

Eine derartige Werkzeugmaschine ist aus der US 5,624,363 A bekannt.

Eine aus der DE 21 14 699 A1 bekannte Werkzeugmaschine ist eine sogenannte Fahrständermaschine, bei der ein erster x-Schlitten in Längsrichtung gegenüber einem Werkstücktisch verfahrbar angeordnet ist. Auf dem x-Schlitten ist ein y-Schlitten angeordnet, der quer zur Längsrichtung, also in y-Richtung, verfahrbar ist. Dieser y-Schlitten wird auch Ständer genannt.

An dem Ständer ist ein Spindelkopf angeordnet, der senkrecht zur x- und y-Richtung, also in z-Richtung, verfahrbar ist. Dieser Spindelkopf, der auch als Spindelstock bezeichnet wird, trägt eine Arbeitsspindel, in die unterschiedliche Werkzeuge zur Bearbeitung eines auf dem Werkstücktisch in eine Vorrichtung eingespannten Werkstückes eingewechselt werden können.

Auf diese Weise können die Werkzeuge relativ zu dem Werkstück in den drei orthogonalen Raumachsen x, y und z verfahren werden.

Bei der spanabhebenden Bearbeitung der Werkstücke entstehen zum einen Späne, zum anderen wird Bohr- und Kühlflüssigkeit verspritzt, weshalb die Werkzeugmaschine insgesamt durch eine Kabine oder Verkleidung nach außen abgekapselt ist. Darüber hinaus muss verhindert werden, dass Späne oder Flüssigkeit auf die Führungsschienen und Antriebseinheiten für die Schlitten und sonstigen Vorrichtungen gelangen. Aus diesem Grund ist der Arbeitsraum der Werkzeugmaschine, also der Bereich, in dem das Werkstück mit dem Werkzeug bearbeitet wird, noch einmal gegenüber dem Rest der Werkzeugmaschine verkapselt.

Bei der bekannten Werkzeugmaschine erfolgt diese Verkapselung des Arbeitsraumes durch längenveränderliche Abdeckungen, die beidseits des x-Schlittens angeordnet sind und sich bis zu den Außenwänden des Arbeitsraumes erstrecken. Diese längenveränderlichen Abdeckungen bestehen jeweils aus einer hinteren Wand sowie einem Dach, die durch einen Faltenbalg ausgebildet sind.

Zwischen den beiden in x-Richtung längenveränderlichen Abdeckungen ist im Dachbereich noch eine in y-Richtung längenveränderliche Dachabdeckung in Form eines weiteren Faltenbalges vorgesehen, der zwischen der vorderen Wand der Verkleidung und dem Spindelstock angeordnet ist.

Zusätzlich zu den bereits beschriebenen längenveränderlichen Abdeckungen weist diese Werkzeugmaschine noch eine sich ebenfalls in y-Richtung erstreckende längenveränderliche Abdeckung auf, die unterhalb des Arbeitsraumes vorgesehen ist, um so die dort vorhandenen Führungen abzudecken.

Auf diese Weise ist vor den Führungen und den einzelnen Schlitten ein durch die hinteren und oberen Abdeckungen sowie die Seitenwände und Vorderwand der Kabine begrenzter Arbeitsraum gebildet, in dem die Werkstücke bearbeitet werden. Durch die Längenveränderlichkeit der einzelnen Abdeckungen wird dabei trotz der guten Verfahrbarkeit der Arbeitsspindel für eine hinreichende Abdichtung des Arbeitsraumes gesorgt.

Ob eine Abdichtung der Führungen des Spindelstockes an dem Ständer erfolgt, ist in der Entgegenhaltung nicht beschrieben.

Aus der EP 0 803 317 A1 ist noch eine Werkzeugmaschine bekannt, bei der der Arbeitsraum im unteren Bereich durch feste und im oberen Bereich durch längenveränderliche Abdeckungen verkapselt ist. Wie schon bei den eingangs beschriebenen Werkzeugmaschinen handelt es sich auch bei dieser Werkzeugmaschine um eine sogenannte Fahrständermaschine, bei der an dem x-Schlitten links und rechts zwei Wangen angeordnet sind, zwischen denen der Ständer in y-Richtung sowie der Spindelstock in z-Richtung verfahren kann. An den schräg nach oben verlaufenden Wangen sind links und rechts Rolloabdeckungen vorgesehen, die als schräge Abdeckung den Arbeitsraum nach oben und nach hinten abdecken, wobei zwischen den beiden Wangen eine weitere Rolloabdeckung vorgesehen ist, die den Arbeitsraum vor dem Spindelstock nach oben abschließt.

Es hat sich nun herausgestellt, dass die Abdeckungen bei der eingangs genannten Werkzeugmaschine sowohl während der Montage als auch im Betrieb Probleme bereiten, sie sind zum einen schwer zu handhaben und behindern zum anderen die freie Beweglichkeit der Verfahrmechanik, über die die Arbeitsspindel in den drei orthogonalen Achsen relativ zu dem Werkstück verfahren werden kann. Bei der aus der EP 0 803 317 A1 bekannten Werkzeugmaschine sind diese Probleme durch die relativ leichten, sich selbst aufwickelnden Rollos beseitigt, allerdings handelt es sich bei dieser Werkzeugmaschine um eine spezielle Konstruktion mit "hängender" Spindel, der x-Schlitten ist deutlich oberhalb des Werkstückes und sogar oberhalb des Arbeitsraumes angeordnet, in den die Arbeitsspindel von oben eintaucht. Aus diesem Grund ist die bekannte Konstruktion nur für relativ schmalbauende Werkzeugmaschinen einsetzbar.

Die unterhalb des Arbeitsraumes bei der DE 41 17 699 A1 vorgesehene, längenveränderliche Abdeckung ist in dieser Entgegenhaltung nicht weiter beschrieben, aus der Zeichnung ergibt sich jedoch, dass diese Abdeckung aus übereinanderlaufenden Lamellen besteht. Wenn eine derartige Abdeckung unterhalb des Arbeitsraumes vorgesehen ist, fallen auf sie also die zum Teil noch sehr heißen Späne, so dass dort ständig die Gefahr besteht, dass die Lamellenabdeckung verklemmt oder sonst wie beschädigt wird.

Aus der DE 298 24 689 U1 ist es bekannt, bei Werkzeugmaschinen alternativ zu teleskopierenden Abdeckungen auch Gliederschürzen einzusetzen, die abschnittsweise in seitlich offenen U-Schienen geführt werden können.

Aus der eingangs erwähnten US 5,624,363 A ist es bekannt, die verschiebbare, bewegliche Abdeckung als Gliederschürze auszubilden.

Vor diesem Hintergrund liegt der vorliegenden Erfindung die Aufgabe zugrunde, die eingangs genannte Werkzeugmaschine derart weiterzubilden, dass bei einfachem, konstruktivem Aufbau für eine sichere und gute Abdeckung des Arbeitsraumes insbesondere auch dann gesorgt wird, wenn Werkzeugmaschinen mit großen Arbeitsräumen, also großen Abmessungen insbesondere in x- und y-Richtung benötigt werden.

Erfindungsgemäß wird diese Aufgabe bei der eingangs genannten Werkzeugmaschine dadurch.gelöst, dass die Abdeckung in Schienen geführt sowie mit dem Ständer über einen Hebel verbunden ist, der gelenkig sowohl mit der Gliederschürze als auch mit dem Ständer verbunden ist.

Die der Erfindung zugrunde liegende Aufgabe wird auf diese Weise vollkommen gelöst.

Die Erfinder der vorliegenden Anmeldung haben erkannt, dass eine verschiebbare, in sich bewegliche Abdeckung eine technisch sehr einfache Lösung für die längenveränderliche Abdeckung des Arbeitsraumes nach unten bietet, beim Verfahren des Ständers in y-Richtung wird die Abdeckung vor- und zurückgezogen. Dabei sorgen die Schienen für eine seitliche Abdichtung der beweglichen Abdeckung.

Dies ist aber nicht nur konstruktiv einfacher als die im Stand der Technik bekannte Lamellenabdeckung, sie bietet auch den weiteren Vorteil, dass es nicht möglich ist, dass auf die Abdeckung fallende Späne zu einem Verklemmen, also einer Behinderung oder einem ganzen Ausfall der Längenveränderlichkeit der Abdeckung führen. Die Gliederschürze wird nämlich als Ganzes vor- und zurückgeschoben, so dass Späne dieses Verschieben nicht beeinträchtigen können.

Gegenüber den im Stand der Technik bekannten Rollos als längenveränderliche Abdeckung besteht der weitere Vorteil, dass die bewegliche Abdeckung oder Gliederschürze aus Metall gefertigt sein kann, so dass sie auch sehr heiße und schwere Späne sowie größere Mengen an Bohr- und Kühlflüssigkeit aufnehmen kann, ohne dass die Abdeckung beschädigt wird. Dies ist bei einem Rollo nicht in diesem Maße der Fall.

Die bewegliche Abdeckung, die auch aus einem flexiblen Material hinreichender Wärmebeständigkeit und Festigkeit bestehen kann, kann dabei über die vordere Kante des Trägers oder Schlittens nach unten herunterhängen, auf dem der Ständer in y-Richtung verfahrbar angeordnet ist. Beim Verfahren des Ständers verlängert oder verkürzt sich also der Abschnitt der Gliederschürze, der den Arbeitsraum nach unten abdeckt und dadurch die Führungen des Ständers vor Spänen, Kühlmittel etc. schützt.

Weiter ist von Vorteil, dass für den Ständer eine Bewegungsmöglichkeit vorgesehen sein kann, die über die Führungsbahn für die Abdeckung hinausgeht. Durch den gelenkigen Hebel wird dann dafür gesorgt, dass das obere Ende der Abdeckung beispielsweise unter den Ständer schwenken kann. Auch diese Maßnahme ermöglicht also eine konstruktiv einfache Abdeckung des unteren Bereiches des Arbeitsraumes.

In einer Weiterbildung ist es bevorzugt, wenn die Abdeckung eine Gliederschürze ist, die in seitlich offenen U-Schienen geführt ist.

Hier ist von Vorteil, dass die Gliederschürze über eine Art Zwangsführung bewegt wird, auf einen Aufwickelmechanismus etc. kann verzichtet werden, lediglich beim Hin- und Herfahren des Ständers in y-Richtung wird die Gliederschürze mit vor- und zurückgezogen, wobei ihre Bewegungsbahn durch den Verlauf der Schienen vorgegeben ist. Diese Lösung ist nicht nur konstruktiv sehr einfach, sie sichert auch ein sicheres Gleiten der Gliederschürze wie bspw. über die vordere Kante des Werkzeugmaschinenteiles, auf dem der Ständer in Querrichtung verfahrbar angeordnet ist.

Weiter ist es bevorzugt, wenn die Gliederschürze im Bereich des Hebels seitliche Schutzbleche aufweist, zwischen denen eine starre Schutzabdeckung vorgesehen ist, und die gelenkig mit einer weiteren Schutzabdeckung verbunden sind, die anderen Endes gelenkig mit dem Ständer an dessen Vorderkante verbunden sind.

Hier ist von Vorteil, dass der Arbeitsraum nicht nur nach unten, sondern auch nach hinten und unterhalb des Ständers abgedeckt ist, wobei die gelenkigen Verbindungen eine Abdeckung ermöglichen, die einerseits konstruktiv einfach aufgebaut ist, andererseits den Bewegungsmöglichkeiten des Ständers keine Beschränkungen auferlegt.

Die starre und die weitere Schutzabdeckung bilden dabei eine Art Scharnier, das beim Zurückfahren des Ständers durch den nach hinten kippenden Hebel zurückgezogen wird, so dass es sich richtig zusammenfaltet, also nicht nach vorne umklappt. Auch hier ist die Bedeutung des Hebels erkennbar.

Allgemein ist es noch bevorzugt, wenn die Abdeckung eine starre vordere Abdeckung aufweist, die vor dem Schlitten geschwungen nach unten und vorne verläuft und unmittelbar unterhalb der Schienen angeordnet ist, so dass sich die Gliederschürze beim Verfahren des Ständers über die vordere Abdeckung verschiebt.

Hier ist von Vorteil, dass die bewegliche Gliederschürze nur in dem Bereich vorgesehen werden muss, der dem Verfahrweg des Ständers in y-Richtung entspricht. Auf diese Weise wird die bewegte Masse weiter verringert und ferner die Konstruktion weiter vereinfacht.

Dabei ist es bevorzugt, wenn die Gliederschürze an ihrem freien vorderen Ende eine Abstreiferleiste aufweist, die in Anlage mit der vorderen Abdeckung ist.

Hier ist von Vorteil, dass beim Vorfahren des Ständers Späne und Flüssigkeiten, die auf der starren, vorderen Abdeckung liegen, nach vorne abgestreift werden, so dass sie nicht unter die Gliederschürze gelangen können, über die sie dann beim Zurückfahren des Ständers unter die Abdeckung gelangen würden.

Allgemein ist es noch bevorzugt, wenn an dem Ständer eine vertikale Rolloabdeckung vorgesehen ist, die mit dem Spindelstock verbunden ist und dessen Führung abdeckt, wobei weiter vorzugsweise die Rolloabdeckung einen an dem Spindelstock angeordneten Rollokasten aufweist, in dem sich die Rolloabdeckung abwickelt, die mit ihrem freien unteren Ende an einer unteren Kante des Ständers befestigt ist.

Hier ist von Vorteil, dass auch die Führungen des Spindelstockes an dem Ständer mit abgedeckt werden.

Allgemein ist es bevorzugt, wenn der Ständer auf einem Schlitten angeordnet ist, der in einer Längsrichtung orthogonal zur Querrichtung verfahrbar ist, wobei weiter vorzugsweise an dem Ständer ein die Arbeitsspindel tragender Spindelstock gelagert ist, der an dem Ständer orthogonal zur Querrichtung höhenverstellbar gelagert ist.

Dies sind an sich bekannte Maßnahmen, sie führen zu einer sogenannten Fahrständermaschine, bei der das Werkzeug in alle drei Richtungen gegenüber dem Werkstück verfahren wird. Die Erfindung kann aber auch bei anderen Werkzeugmaschinen eingesetzt werden, bei denen nicht sämtliche Achsen im Werkzeug vorhanden sind, sondern beispielsweise eine oder zwei Achsen im Werkstück liegen, so dass sich also in diesen Achsen der Werkstücktisch gegenüber der Arbeitsspindel verschiebt.

Vor diesem Hintergrund betrifft die Erfindung auch eine Werkzeugmaschine der eingangs genannten Art, bei der jedoch das Werkzeug in allen drei Richtungen feststeht, so dass sämtliche Bewegungen im Werkstück konzentriert sind. Die erfindungsgemäße Abdeckung mit der Gliederschürze ist dann nicht an dem Ständer, sondern an dem Werkstücktisch vorgesehen.

Weiter ist es bevorzugt, wenn an beiden Seiten des Schlittens jeweils eine Wange befestigt ist, zwischen denen der Ständer verfahrbar ist, der vorzugsweise gegenüber den Wangen über ein Abstreiferblech abgedichtet ist, wobei weiter vorzugsweise die erfindungsgemäß vorgesehene Abdeckung zwischen den Wangen geführt ist und den Ständer und dessen Führungen zumindest zum Teil abdeckt.

Diese Maßnahme ist konstruktiv von Vorteil, durch die Wangen, zwischen denen sich der Ständer in y-Richtung und an dem Ständer der Spindelstock in z-Richtung verfahren kann, wird für eine gute Abdichtung des Arbeitsraumes nach hinten gesorgt, wobei diese Abdichtung jetzt sozusagen ausgenutzt wird, um auch die Abdichtung nach unten seitlich zu verkapseln, indem nämlich die Führungsschienen für die Gliederschürze an diesen Wangen aufeinander zuweisend angeordnet sind.

Dabei ist es weiter bevorzugt, wenn die vordere Abdeckung vor dem Schlitten geschwungen nach unten und vorne verläuft.

Hier ist von Vorteil, dass auch die vordere Abdeckung noch zwischen den Wangen angeordnet ist, so dass ihre seitliche Abdichtung über die oberhalb der vorderen Abdeckung verlaufenden Schienen erfolgt. Durch die gewählte Konstruktion bewegt sich die erfindungsgemäß vorgesehene Abdeckung, die die zwangsgeführte Gliederschürze sowie ggf. die vordere Abdeckung umfasst, beim Verfahren des x-Schlittens mit.

Allgemein ist es bevorzugt, wenn an dem Schlitten auf jeder seiner Seiten je eine in Längsrichtung längenveränderliche Abdeckung für den Arbeitsraum vorgesehen ist, die mit ihrem jeweiligen ersten Ende mit dem Schlitten und mit dem jeweiligen zweiten Ende mit einer Seitenwand des Arbeitsraumes verbunden ist, wobei jede längenveränderliche Abdeckung jeweils eine hintere Wand sowie ein Dach aufweist, das vorzugsweise lösbar mit der hinteren Wand verbunden ist.

Durch diese Maßnahme wird ein großes Problem bei der Montage der bekannten längenveränderlichen Abdeckungen beseitigt. Dieses Problem besteht darin, dass im Stand der Technik sehr unhandliche, einstückige Faltenbalge, die sowohl die Dachabdeckung als auch die hintere Wand bilden, vor der Montage noch mit sehr ausladenden z-förmigen Rahmen verbunden werden müssen, wie dies aus der DE 199 456 900 A1 bekannt ist, die eine Werkzeugmaschine ähnlich zu der eingangs genannten Werkzeugmaschine beschreibt, wie sie aus der DE 41 17 699 A1 bekannt ist.

Diese bekannte Konstruktion bringt nicht nur bei der Montage und bei möglichen Reparatur- oder gar Austauscharbeiten Probleme mit sich, die Masse dieser längenveränderlichen Abdeckung ist auch so groß, dass sie insbesondere bei großbauenden Werkzeugmaschinen Einfluss auf das Beschleunigungsvermögen und die Verfahrgeschwindigkeit des Spindelstockes nimmt.

Da nun aber erfindungsgemäß die hintere Wand und das Dach lösbar miteinander verbunden sind, gibt es sowohl bei der Montage als auch bei der Reparatur deutliche Vereinfachungen in der Handhabung. Ferner lässt sich durch die neue Konstruktion erstaunlicherweise auch eine leichtere Abdeckung herstellen.

Die Möglichkeit, die hintere Wand und die Dachabdeckung sozusagen zweiteilig herzustellen, entspricht nun aber nicht dem üblichen Vorgehen im Stand der Technik, denn dort wurde diese Zweiteiligkeit gerade deshalb nie vorgesehen, weil dadurch keine gute Abdeckung des Arbeitsraumes erzielt werden kann bzw. die Verbindung zwischen den beiden längenveränderlichen Abschnitten dieser Abdeckung kompliziert und aufwändig ist.

Zwar beschreibt die DE 202 08 600 U1 eine Faltenbalgkonstruktion, bei der Wand-und Dachbalg aneinandersteckbar miteinander verbunden sind, dort ist die Konstruktion jedoch so gewählt, dass sich Wand- und Dachbalg miteinander verkeilen. Diese Konstruktion ist im an der Werkzeugmaschine montierten Zustand nicht problemlos zerlegbar.

Die Erfinder der vorliegenden Anmeldung haben nun jedoch erkannt, dass es durch entsprechende konstruktive Maßnahmen doch möglich ist, eine zweiteilige Abdeckung zu verwenden, die einerseits einfach zusammen- und auseinanderzubauen ist und andererseits doch für eine sichere Abdeckung sorgt.

Dies wird vorzugsweise dadurch erreicht, dass das Dach steckbar mit der hinteren Wand verbunden ist. Diese Steckbarkeit ermöglicht es, ohne Schraubmaßnahmen oder sonstige zeitaufwändige Techniken, die beiden längenveränderlichen Teile der Abdeckung unmittelbar während der Endmontage der neuen Werkzeugmaschine miteinander zu verbinden, so dass auch bei Reparaturarbeiten ein leichtes Entfernen beispielsweise der Dachabdeckung möglich ist.

Dabei ist es bevorzugt, wenn die hintere Wand und das Dach an den Wangen befestigt ist.

Diese Maßnahme ist konstruktiv von Vorteil, denn die sowieso vorgesehenen Wangen dienen zur Aufnahme der ständerseitigen Enden der Abdeckung.

Dabei ist es bevorzugt, wenn die hintere Wand einen vertikalen und/oder das Dach einen horizontalen Lamellenbalg aufweist, der jeweils aus ineinanderschiebbaren Lamellen gefertigt ist.

Diese Maßnahme ist an sich aus dem Stand der Technik bekannt, aus ineinanderschiebbaren Lamellen bestehende Lamellenbalge haben sich als Abdeckung im

Bereich von Werkzeugmaschinen vielfach bewährt, sie können so ausgebildet werden, dass sie einen sicheren Schutz gegen die häufig sehr heißen Späne und Flüssigkeit bieten.

Dabei ist es dann bevorzugt, wenn jede Lamelle eine vorzugsweise aus Metall gefertigte Abdecklamelle und einen Träger aufweist, der im Wesentlichen quer zu der Abdecklamelle verläuft.

Derartige Lamellenbalge sind ebenfalls aus dem Stand der Technik bekannt, sie haben durch ihre spezielle Konstruktion nicht nur eine gute Abdeckwirkung, sondern auch in sich eine hinreichende Steifigkeit, so dass auf zusätzliche Unterstützungsmaßnahmen, die ein Durchbiegen oder Durchhängen verhindern sollen, verzichtet werden kann. Der Träger kann dabei entweder ein Kunststoffträger sein, auf den die Abdecklamelle montiert wurde. Es ist aber auch möglich, den Träger einstückig mit der Abdecklamelle auszubilden, indem die Abdecklamelle abgekantet wird.

Insgesamt ist es dann bevorzugt, wenn je eine Lamelle des vertikalen und des horizontalen Lamellenbalgs steckbar miteinander verbunden sind.

Hier ist von Vorteil, dass die Steckverbindung sozusagen an den sowieso vorgesehenen Lamellen selbst ausgebildet wird, es ist nicht erforderlich, zusätzlich noch weitere Halterungen vorzusehen, die für die Steckbarkeit sorgen, diese Maßnahme ist also ebenfalls konstruktiv von Vorteil.

Dabei ist es dann bevorzugt, wenn jede Lamelle ein im Wesentlichen quer zu der Abdecklamelle verlaufendes Schwert aufweist, das mit dem Träger verbunden ist, und über das die Lamelle mit der jeweils anderen Lamelle zusammengesteckt ist, wobei vorzugsweise das Schwert der vertikalen Lamellen zwei Platten und das Schwert der horizontalen Lamellen ein Rastteil aufweist, das zwischen die Platten gesteckt ist.

Auch diese Maßnahme ist konstruktiv von Vorteil, es ist lediglich erforderlich, bei den bekannten längenveränderlichen Abdeckungen jeweils zusätzlich ein Schwert vorzusehen, wobei der Zusammenbau dadurch vereinfacht wird, dass nach der Montage des vertikalen Lamellenbalgs die Dachabdeckung sozusagen quer seitlich eingesteckt werden kann, wobei auf diese Weise auch ein Entfernen des horizontalen Lamellenbalgs möglich ist. Diese Maßnahme ist also nicht nur konstruktiv von Vorteil, sie weist auch hinsichtlich der Handhabung besondere Vorteile auf. Hinzu kommt, dass die erfindungsgemäße Art der Steckverbindung sehr leicht baut, so dass insgesamt eine Abdeckung mit geringem Gewicht bereitgestellt werden kann.

Allgemein ist es dabei bevorzugt, wenn zwischen der hinteren Wand und dem Dach eine Labyrinthdichtung vorgesehen ist, die vorzugsweise zwei zueinander parallele Stege umfasst, von denen einer an der hinteren Wand und der andere an dem Dach vorgesehen ist, wobei weiter vorzugsweise beide Stege Verlängerungen der Abdecklamellen sind.

Auch diese Maßnahme ist konstruktiv von Vorteil, durch diese einfach ausgebildete Labyrinthdichtung ergibt sich nämlich nach Erkenntnis der Erfinder eine sehr gute Abkapselung des Arbeitsraumes, wobei andererseits eine Beweglichkeit der Lamellen zueinander erhalten bleibt, denn auch die Steckverbindung selbst lässt ein gewisses Spiel zu. Auf diese Weise wird auch ein Verklemmen der neuen Abdeckung verhindert.

Dann ist es bevorzugt, wenn das Dach an seiner freien Vorderseite gleitend auf einer Auflagefläche einer vorderen Wand des Arbeitsraumes, vorzugsweise einer vorderen Wand einer die Werkzeugmaschine nach außen abschließenden Kabine aufliegt.

Hier ist von Vorteil, dass sozusagen das Gegenlager für die Steckverbindung an der sowieso vorgesehenen Kabine angeordnet wird, das obere Dach liegt also vorne gleitend auf der Auflagefläche auf und wird hinten über die Steckverbindung von den vertikalen Lamellen gehalten. Diese Maßnahme hat nicht nur konstruktive Vorteile, sie führt auch dazu, dass das Gewicht weiter reduziert wird.

Dabei ist es dann bevorzugt, wenn die hintere Wand an ihrer unteren Kante gleitend an einer Führungsschiene geführt ist, die vorzugsweise die hintere Wand in zwei Richtungen führt, die orthogonal zueinander und zur Längsrichtung verlaufen, wobei die Führungsschiene weiter vorzugsweise in Längsrichtung gesehen einen dachförmigen Querschnitt aufweist, den die Wand mit ihrer unteren Kante von oben übergreift.

Auch diese Maßnahmen sind konstruktiv von Vorteil, denn zum einen sorgen sie in Kombination oder allein dafür, dass die hintere Wand lediglich aus den senkrechten Lamellen aufgebaut sein muss, der im Stand der Technik vorgesehene, hintere Querbalken, der ein Verkanten verhindern soll, ist hier nicht erforderlich. Im einfachsten Fall nimmt die Führungsschiene das Gewicht der hinteren Lamellen auf, das Verkanten wird über die Steckverbindung und die vordere Auflage des Daches verhindert. Das Verkippen kann aber durch die spezielle Konstruktion der Führungsschiene weiter verhindert werden, indem sie nämlich zusätzlich zu dem Gewicht der Lamellen in z-Richtung auch noch eine Kraft in y-Richtung aufnimmt. Wenn der Querschnitt dachförmig ist, ergibt sich bei einfacher Konstruktion und insbesondere einfacher Montagemöglichkeit eine zuverlässige Führung und Sicherung gegenüber Verkanten.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der beigefügten Zeichnung dargestellt und wird in der nachfolgenden Beschreibung näher erläutert. Es zeigen:
- Figur 1: eine schematische Vorderansicht der neuen Werkzeugmaschine;
- Figur 2: eine perspektivische, schematische Ansicht der Werkzeugmaschine aus Figur 1 von schräg hinten, mit teilweise weggebrochener Verkleidung;
- Figur 3: eine vergrößerte perspektivische Darstellung des Arbeitsraumes der Werkzeugmaschine aus Figur 1, in der die neuen Abdeckungen gezeigt sind;
- Figur 4: eine Darstellung wie Figur 3, jedoch lediglich im Bereich der den Ständer und dessen Führung abdeckenden, weiteren Abdeckung;
- Figur 5: eine Seitenansicht der Darstellung gemäß Figur 4;
- Figur 6: eine Darstellung wie Figur 5, jedoch mit in y-Richtung ganz nach vorne gefahrenem Ständer;
- Figur 7: eine perspektivische, schematische Darstellung des das Dach bildenden, horizontalen Lamellenbalges; und
- Figur 8: eine schematische Seitenansicht der Steckverbindung zwischen einer horizontalen und einer vertikalen Lamelle, wobei die von der Steckverbindung abgelegenen Führungen der beiden Lamellen ebenfalls schematisch gezeigt sind.

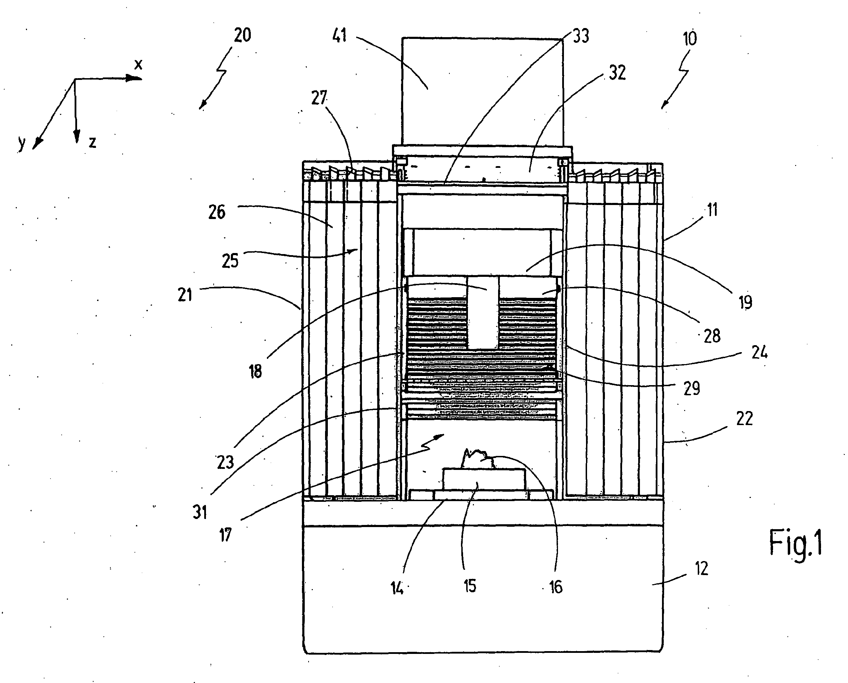

In Figur 1 ist mit 10 eine Werkzeugmaschine in schematischer Vorderansicht gezeigt, ihre Verkleidung 11 ist teilweise entfernt.

Die Werkzeugmaschine weist einen Maschinenfuß 12 auf, auf dem ein Werkstücktisch 14 angeordnet ist, der eine Vorrichtung 15 trägt, in die ein zu bearbeitendes Werkstück 16 eingespannt ist. Der Werkstücktisch 15 ist in Figur 1 lediglich aus Darstellungsgründen relativ weit unten auf dem Maschinenfuß dargestellt, er kann deutlich höher angeordnet sein, so dass er sich weiter oben in einem bei 17 angedeuteten Arbeitsraum befindet, wo das Werkstück 16 dann mit einem in eine bei 18 angedeutete Arbeitsspindel eingespannten Werkzeug bearbeitet wird. Das Werkzeug ist aus Gründen der Übersichtlichkeit in Figur 1 ebenfalls nicht gezeigt, es ragt in an sich bekannter Weise unten aus der Arbeitsspindel 18 heraus.

Die Arbeitsspindel 18 ist in einem Spindelstock 19 gelagert, der in noch zu beschreibender Weise an einem Fahrständer höhenverstellbar gelagert ist, der wiederum senkrecht zur Zeichnungsebene verfahrbar auf einem Schlitten gelagert ist, der seinerseits quer in der Zeichnung verfahrbar ist.

Auf diese Weise ist die Arbeitsspindel 18 gegenüber dem Werkstück 16 in den drei orthogonalen Richtungen eines bei 20 angedeuteten Koordinatensystems verfahrbar.

Die Verkleidung 11 weist eine aus der Zeichenebene nach vorne vorspringende linke Seitenwand 21 sowie eine ebenfalls aus der Zeichenebene nach vorne vorspringende rechte Seitenwand 22 auf, die vordere Wand der Verkleidung ist in Figur 1 nicht zu erkennen. Zwischen der linken Wand 21 sowie einer linken Wange 23 und der rechten Wand 22 sowie einer rechten Wange 24 ist jeweils eine längenveränderliche Abdeckung 25 vorgesehen. Die linke Wange 23 sowie die rechte Wange 24 sind in noch zu beschreibender Weise an dem x-Schlitten befestigt, zwischen ihnen kann der Spindelstock 19 in z-Richtung und in y-Richtung verfahren. Beim Verfahren des x-Schlittens in x-Richtung dagegen verändern die längenveränderlichen Abdeckungen 25 ihre Länge, so dass der Arbeitsraum 17 dadurch nach hinten und nach oben abgeschlossen bleibt. Zu diesem Zweck umfassen die längenveränderlichen Abdeckungen jeweils eine hintere Wand 26 sowie ein lösbar damit verbundenes Dach 27.

Unterhalb des Spindelstockes 19 ist ein Rollokasten 28 angeordnet, aus dem eine Rolloabdeckung 29 senkrecht nach unten geht, die die Führungen des Spindelstockes 19 an dem in Figur 1 nicht gezeigten Ständer abdeckt.

Unterhalb der Rolloabdeckung 29 ist noch eine weitere Abdeckung 31 gezeigt, die zwischen den Wangen 23 und 24 vorgesehen ist und die in Figur 1 ebenfalls nicht gezeigten Führungen des Ständers, also des y-Schlittens auf dem x-Schlitten abdeckt.

Um den Ständer herum ist ein schematisch angedeuteter Führungsrahmen 32 vorgesehen, unterhalb dessen eine obere Abdeckung 33 vorgesehen ist, die den Arbeitsraum nach oben und vor dem Spindelstock 19 abdeckt und sich zur Vorderseite der Kabine erstreckt.

Auf diese Weise ist der Arbeitsraum 17 durch die beiden Seitenwände 21 und 22, die beiden hinteren Wände 26, die beiden Dächer 27, die Rolloabdeckung 29, die weitere Abdeckung 31 sowie die obere Abdeckung 33 und die nicht gezeigte vordere Wand der Verkleidung 11 vollständig gekapselt, so dass beim Bearbeiten des Werkstückes 16 entstehende Späne sowie Bohr- und Kühlwasser nicht auf Führungen der Verschiebemechanik gelangen können, wo sie zu Schäden oder gar Betriebsstörungen führen könnten.

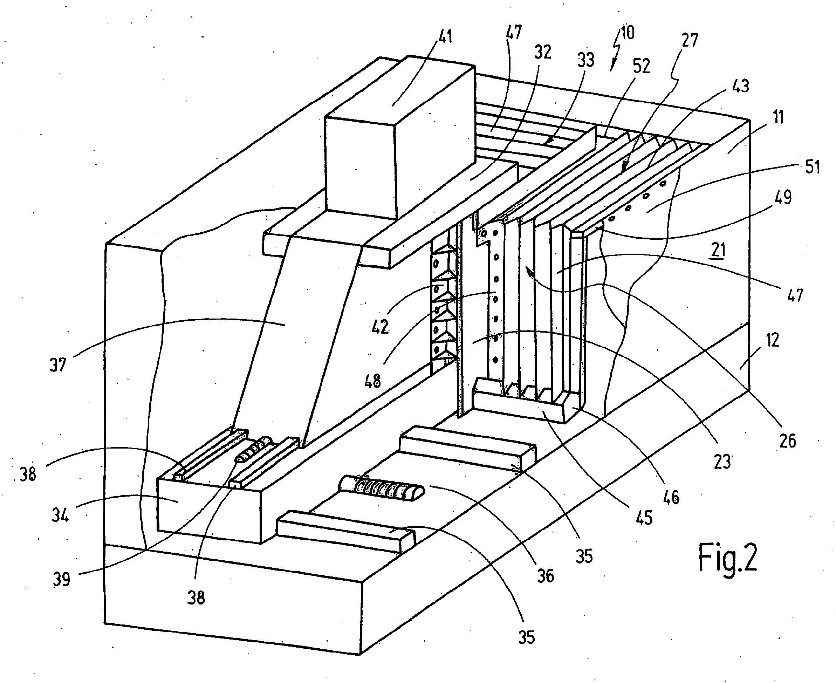

In Figur 2 ist die Werkzeugmaschine aus Figur 1 jetzt in einer schematischen und perspektivischen Ansicht von hinten links gezeigt, wobei die Verkleidung 11 teilweise weggebrochen ist.

Auf dem Maschinenfuß 12 ist ein in x-Richtung verfahrbarer x-Schlitten 34 angeordnet, der über Führungen 35 geführt und über eine x-Spindel 36 verfahren wird.

Auf dem x-Schlitten 34 ist ein Ständer 37 angeordnet, der als y-Schlitten wirkt. Der Ständer 37 ist über Führungen 38 auf dem x-Schlitten 34 geführt und wird über eine y-Spindel 39 verfahren.

An dem Ständer 37 ist in an sich bekannter Weise der in Figur 1 gezeigte Spindelstock 19 höhenverstellbar gelagert, in Figur 2 ist lediglich eine obere Spindelstockabdeckung 41 gezeigt, die den Spindelstock sowie das ggf. dort vorgesehene, die Arbeitsspindel umgebende Magazin schützt.

In Figur 2 ist ferner die linke Wange 23 zu erkennen, die an dem x-Schlitten 34 befestigt ist. An der linken Wange 23 ist ferner ein Abstreiferblech 42 vorgesehen, das in gleitender Anlage mit dem Spindelstock 37 ist, so dass beim Verfahren des Spindelstockes 37 zwischen den Wangen 23 und 24 ggf. im Arbeitsraum 17 auf den Spindelstock 37 gelangte Späne sowie Flüssigkeit abgestreift werden, so dass sie nicht in den hinteren Bereich der Werkzeugmaschine 10 gelangen können.

Ferner ist in Figur 2 das Dach 27 gezeigt, das als Lamellenbalg 43 ausgebildet ist. Ferner ist die hintere Wand 26 zu sehen, die als Lamellenbalg 44 ausgebildet ist.

Der Lamellenbalg 44 ist an seinem unteren Ende an einer sich in x-Richtung erstreckenden Führungsschiene 45 geführt, die einen dachförmigen Querschnitt 46 aufweist. Auf diese Weise trägt die Führungsschiene 45 den Lamellenbalg 44 und verhindert sein Verkippen.

Bei 47 ist noch ein weiterer y-Lamellenbalg angedeutet, der die obere Abdeckung 33 bildet.

Die Lamellenbalge 43 und 44 sind über ein Lochblech 48 an der Wange 23 befestigt, anderen Endes sind die beiden Lamellenbalge über Balken 49 mit einer Innenwand 51 des Arbeitsraumes 17 bzw. direkt mit der Seitenwand verbunden. Es sei erwähnt, dass der Arbeitsraum 17 seitlich nicht zwingend durch die Seitenwände 21, 22 begrenzt sein muss, sondern auch durch weiter innen liegende Innenwände 51 begrenzt sein kann.

Schließlich ist noch zu erkennen, dass der Lamellenbalg 43 an seinem vorderen Ende auf einer an der Vorderseite der Verkleidung 11 vorgesehenen Auflagefläche 52 geführt ist, so dass der horizontale Lamellenbalg 43 sich einen Endes auf der Auflagefläche 52 abstützt und anderen Endes durch den vertikalen Lamellenbalg 44 getragen wird, der seinerseits durch die Führungsschiene 45 abgestützt wird.

Beim Verfahren des x-Schlittens 34 verkürzt oder verlängert sich somit die hintere Wand 26 und das Dach 27, wobei jedoch die Verkapselung des von ihnen übergriffenen Arbeitsraumes erhalten bleibt.

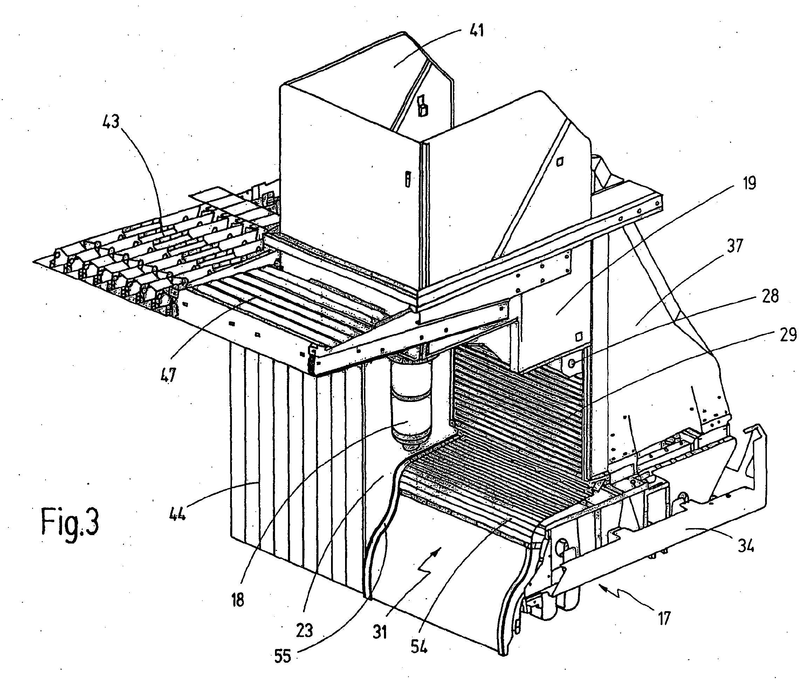

Figur 3 zeigt eine perspektivische Ansicht des Arbeitsraumes 17 von schräg vorne, wobei die Werkzeugmaschine ansonsten nur im Ausschnitt gezeigt ist. In Figur 3 ist wiederum der x-Schlitten 34 gezeigt, auf dem der Ständer 37 angeordnet ist, der den Spindelstock 19 trägt. Unterhalb des Spindelstockes ist der Rollokasten 28 erkennbar, aus dem die Rolloabdeckung 29 nach unten hervorragt, die an einer vorderen Unterkante des Ständers 37 befestigt ist, so dass sie sich beim Verfahren des Spindelstockes 19 in z-Richtung verlängert oder verkürzt.

Links in Figur 3 ist die Wange 23 vorgesehen, von der sich nach links der hintere, vertikale Faltenbalg 44 sowie der obere, horizontale Faltenbalg 43 erstrecken. Schließlich ist noch der y-Lamellenbalg 47 zu sehen, der sich von dem Spindelstock 19 nach vorne zu einer auch hier nicht gezeigten vorderen Wand der Verkleidung erstreckt.

Deutlicher zu sehen ist in Figur 3 jetzt die weitere Abdeckung 31, die den Ständer 37 und dessen Führungen abdeckt und in y-Richtung, also in Querrichtung, längenveränderlich ausgebildet ist.

Die weitere Abdeckung 31 umfasst dazu eine Gliederschürze 54, also eine in sich bewegliche, aus einzelnen gegeneinander beweglichen Gliedern bestehende Abdecktung, die an ihrem hinteren Ende mit dem Ständer 37 verbunden ist und seitlich in seitlich offenen U-Schienen 55 geführt ist, die an der Wange 23 sowie ebenfalls an der nicht gezeigten Wange 24 angeordnet sind. Auf diese Weise ist die Gliederschürze 54 sozusagen zwangsgeführt, beim Verfahren des Ständers 37 bewegt sie sich in y-Richtung nach vorne bzw. nach hinten, wobei sie der geschwungenen, nach unten gewellten Form der U-förmigen Schienen 55 folgt.

Ferner sorgen die Schienen 55 für eine Abdichtung der Gliederschürze gegenüber den Wangen 23, 24.

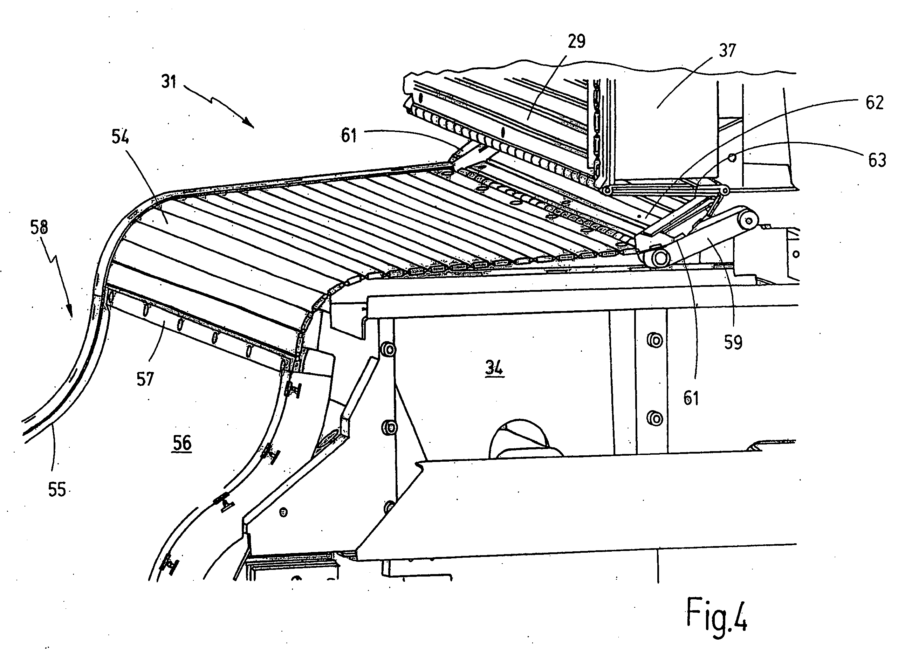

In Figur 4 ist der Bereich der weiteren Abdeckung 31 noch einmal vergrößert dargestellt. Im Ausschnitt zu sehen sind der x-Schlitten 34 sowie der Ständer 37 und die Rolloabdeckung 29.

Zunächst ist zu erkennen, dass die weitere Abdeckung 31 eine vordere starre Abdeckung 56 aufweist, die vor dem x-Schlitten 34 geschwungen nach unten verläuft und unmittelbar unterhalb der U-Schienen 55 angeordnet ist, so dass sich die Gliederschürze 54 beim Verfahren des Ständers 37 über die vordere Abdeckung 56 schiebt. An ihrem vorderen freien Ende ist die Gliederschürze 54 mit einer Abstreiferleiste 57 versehen, die in Anlage mit der vorderen Abdeckung 56 ist, so dass sie beim Vorfahren des Ständers 37 und damit beim Verschieben der Gliederschürze 54 in Figur 4 nach links und unten Späne und Flüssigkeiten, die sich auf der vorderen Abdeckung 56 angesammelt haben, weiter nach unten schiebt. Auf diese Weise wird verhindert, dass die Gliederschürze 54 beim Zurückfahren des Ständers 37 Späne und Flüssigkeiten mitschleppt, die so unter die weitere Abdeckung 31 geraten könnten.

In Figur 4 ist deutlich zu erkennen, dass die U-Schienen 55 und die vordere Abdeckung 56 bei 58 nach unten durchgeschwungen sind, sie gehen nicht einfach schräg nach vorne und unten. Auf diese Weise wird durch die Durchbiegung 58 weiterer Raum geschaffen, der beispielsweise für einen Werkzeugwechsler benötigt wird, der oben um die Arbeitsspindel 18 herum angeordnet ist, und beim Werkzeugwechsel unter die Arbeitsspindel 18 tauchen muss. Besonders gut in Figur 3 ist zu erkennen, dass durch die Durchbiegung 58 Raum unmittelbar unterhalb der Arbeitsspindel 18 geschaffen wird.

Zurückkehrend zu Figur 4 ist zu erkennen, dass die Gliederschürze 54 nicht unmittelbar mit dem Ständer 37 verbunden ist, sondern dass dort ein Hebel 59 vorgesehen ist, der gelenkig sowohl mit dem Ständer 37 als auch mit der Gliederschürze 54 verbunden ist. Ein weiterer Hebel ist auf der in Figur 4 nicht zu erkennenden linken Seite der Gliederschürze 54 vorgesehen. An dem Hebel 59 ist jeweils ein seitliches Schutzblech 61 vorgesehen, wobei in Figur 4 beide Schutzbleche 61 gezeigt sind. Zwischen den Schutzblechen 61 erstreckt sich eine starre Schutzabdeckung 62, die an ihrem von der Gliederschürze 54 abgelegenen Ende gelenkig mit einer weiteren Schutzabdeckung 63 verbunden ist. Die Schutzabdeckung 63 ist an ihrem von der Schutzabdeckung 62 abgelegenen Ende gelenkig dort mit dem Ständer 37 verbunden, wo auch die Rolloabdeckung 29 mit ihrem unteren Ende befestigt ist.

Auf diese Weise ergibt sich eine vollständige Abdeckung der Vorderseite des Ständers 37 sowie des Bereiches, in dem der Ständer 37 nach vorne über den x-Schlitten 34 hinausragt. Die Schutzbleche 61 sorgen dabei gleichzeitig für eine seitliche Abdeckung, sie sind dazu innerhalb der U-Schienen 55 angeordnet.

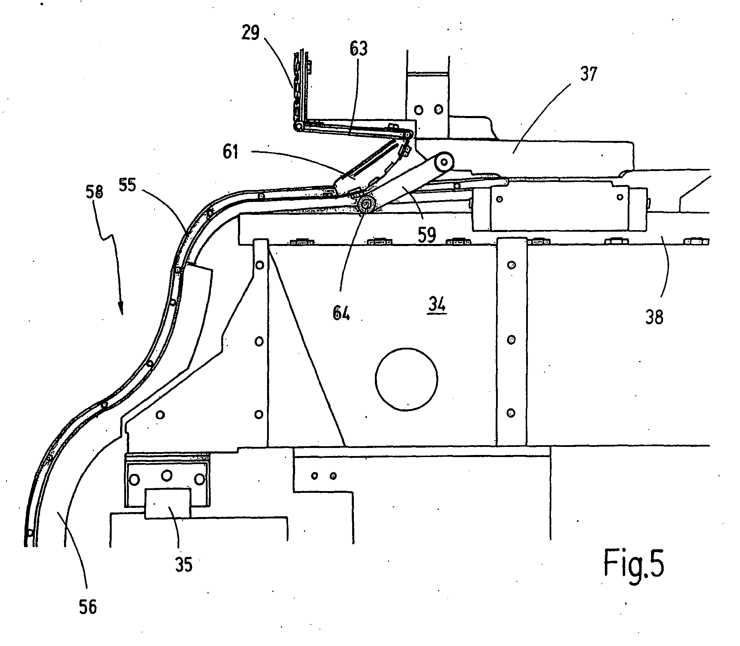

In Figur 5 ist der Ausschnitt der Figur 4 noch einmal in einer schematischen Seitenansicht gezeigt, wobei die Gliederschürze 54 nicht dargestellt ist. Gut zu erkennen ist in Figur 5 noch einmal der Verlauf der Führungsschiene 55, die bei 58 nach unten einbeult, um dann weiter nach vorne unten zu verlaufen, so dass sie den x-Schlitten 34 vollständig abdeckt.

Ferner ist zu erkennen, dass der Hebel 59 mit einer vorderen Rolle 64 auf der aus Figur 2 bekannten Führung 38 für den Ständer 37 aufliegt.

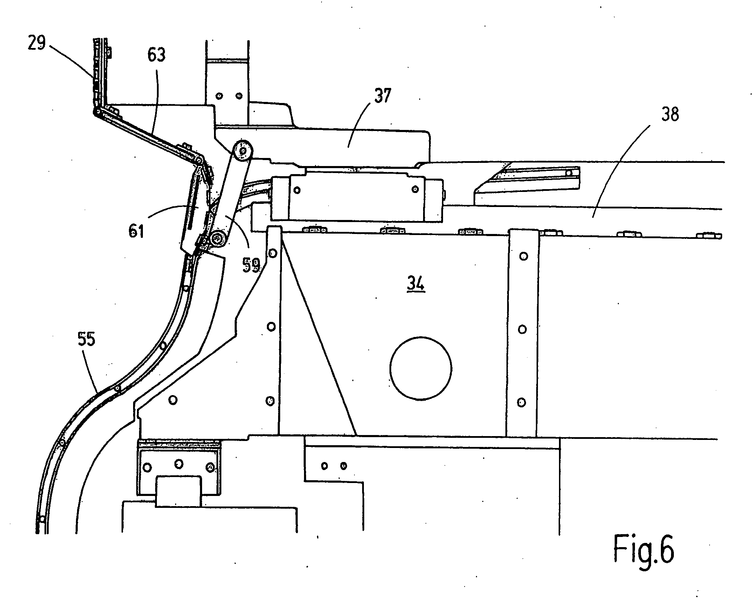

Wenn der Ständer 37 in Figur 5 jetzt weiter nach links verfahren wird, schiebt sich also zunächst die Gliederschürze 54 über die vordere Abdeckung 56 (Figur 4) bis schließlich der Hebel 59 den vorderen Bereich des x-Schlittens 34 erreicht. Daraufhin kippt der Hebel 59 nach unten weg, wodurch er gleichzeitig die Schutzbleche 61 hochkant stellt und die weitere Schutzabdeckung 63 nach unten klappt. Diese Situation ist in Figur 6 dargestellt.

Wenn der Ständer 37 jetzt in Figur 6 nach rechts zurückfährt, so gelangt der Hebel wieder in den Bereich der Führung 38, so dass er in Figur 6 im Uhrzeigersinn verschwenkt wird, wobei er die in Figur 6 nicht gezeigte Gliederschürze mitnimmt.

Durch den Hebel wird sowohl beim Vorfahren als auch beim Zurückfahren des Ständers 37 dafür gesorgt, dass die Gliederschürze nicht in den U-förmigen Schienen 55 verkanten oder verklemmen kann.

Weil die Gliederschürze nicht unmittelbar an dem Ständer 37 befestigt ist, kann der Ständer 37 weiter nach vorne gefahren werden, ohne dass die Gefahr besteht, dass die Gliederschürze von dem Ständer abreißt. Durch den zwischengeschalteten Hebel 59 und die beiden Drehpunkte ist es so möglich, beim Vorfahren des Ständers 37 den Anlenkpunkt der Gliederschürze der U-Schienen 55 folgen zu lassen. In Figur 6 ist zu erkennen, dass der obere Drehpunkt des Hebels 59 weit über die Kante des x-Schlittens 34 hinausgefahren ist. Wenn dort die Gliederschürze angelenkt worden wäre, könnte sie nicht mehr in der U-Schiene 55 geführt werden. Der Hebel 59 ermöglicht also eine bessere Verfahrmöglichkeit des Ständers 37, ohne dass die Gefahr besteht, dass die mit dem Ständer 37 über den Hebel 59 jetzt indirekt verbundene Gliederschürze stark belastet wird oder gar abreißt.

Die Schutzabdeckungen 62, 63 bilden eine Art Scharnier, das sich beim Vorfahren des Ständers 37 in die in Fig. 6 gezeigte Position streckt, so dass die Gliederschürze 54 weit nach unten gelangt. Bei Zurückfahren des Ständers 37 sorgt der Hebel 59 jetzt dafür, dass das Scharnier nicht nach vorne umklappt, sondern sich wieder unter den Ständer 37 klappt.

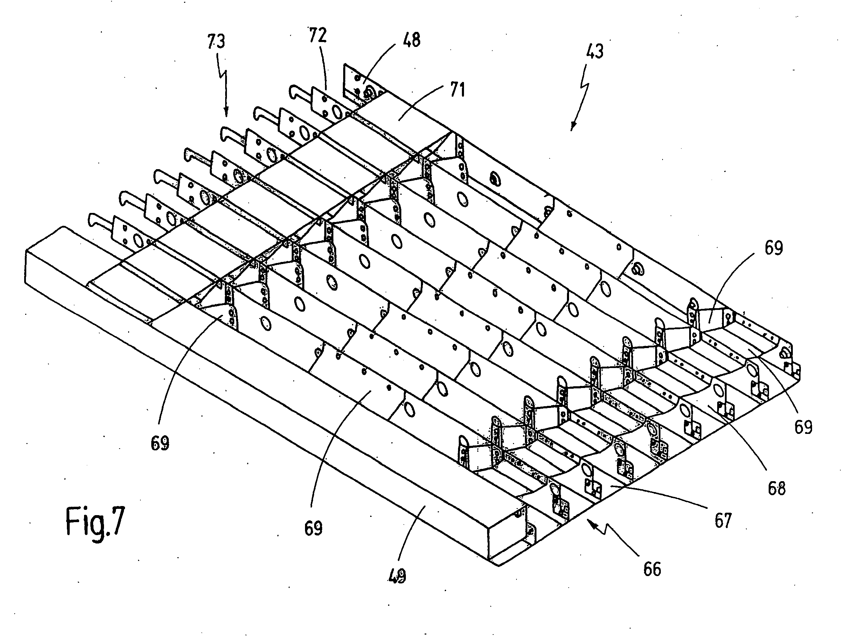

In Figur 7 ist in einer perspektivischen Darstellung der horizontale Lamellenbalg 43 gezeigt, der aus mehreren nebeneinander angeordneten Lamellen 66 besteht, die sich zwischen dem Balken 49 und dem Lochblech 48 erstrecken, die beide aus Figur 2 bekannt sind.

Jede Lamelle besteht aus einer abgewinkelten, metallischen Abdecklamelle 67 sowie einem senkrecht dazu verlaufenden Träger 68. Der Träger 68 ist einteilig mit der Abdecklamelle 67 ausgebildet, er wurde von ihr abgekantet. Er kann aber auch aus Kunststoff bestehen, auf dem die Abdecklamellen mit Vorspannung montiert sind. Zwischen den einzelnen Lamellen sind Kunststoffbänder 69 vorgesehen, die sowohl quer als auch längs zu den Trägern 68 verlaufen, wodurch sie für einen gleichmäßigen Auszug der Lamellen 66 sorgen. Insoweit ist der Lamellenbalg aus dem Stand der Technik bekannt, durch die soeben beschriebene Konstruktion weist er eine entsprechende Steifigkeit sowohl in Längsrichtung als auch in Querrichtung auf.

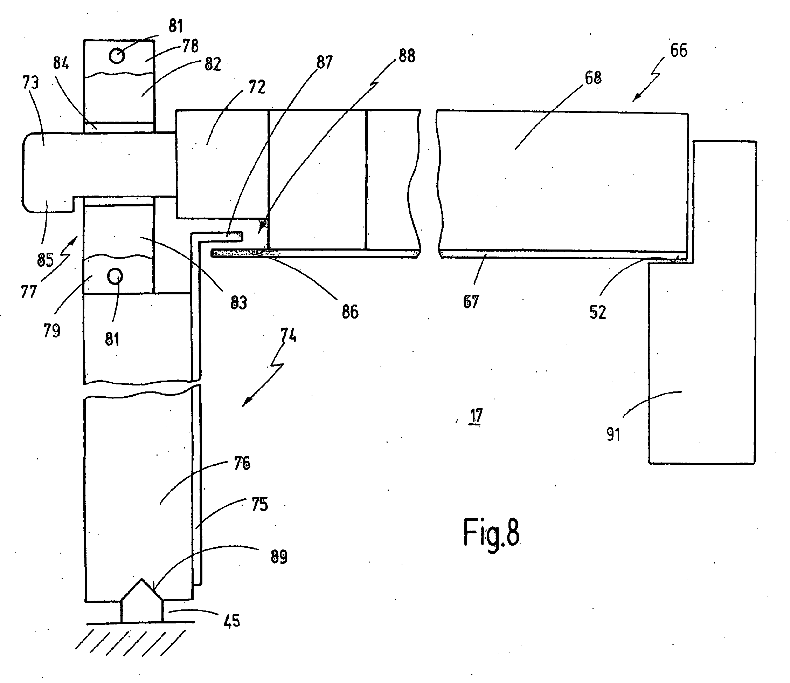

An seinem oberen Ende 69 ist der Lamellenbalg 43 einerseits mit Versteifungslamellen 71 und andererseits mit Schwertern 72 versehen, an denen jeweils ein Rastteil 73 angeordnet ist, über das jede Lamelle 66 des horizontalen Faltenbalges mit einer zugeordneten Lamelle 74 des vertikalen Faltenbalges 44 steckbar verbunden werden kann, wie dies jetzt anhand von Figur 8 erläutert wird.

Die vertikalen Lamellen 74 weisen ebenfalls eine aus Metall bestehende Abdecklamelle 75 und einen dazu quer verlaufenden, abgekanteten Träger 76 auf. An dem Träger 76 ist ein im Wesentlichen quer zu der Abdecklamelle 75 verlaufendes Schwert 77 vorgesehen. Ferner ist noch zu erkennen, dass auch das Schwert 72 im Wesentlichen quer zu der Abdecklamelle 67 der horizontalen Lamelle 66 verläuft.

Das Schwert 77 besteht aus einer hinteren Platte 78 sowie einer vorderen Platte 79, die über Nieten 81 zusammengehalten sind.

Die vordere Platte 79 ist teilweise weggebrochen dargestellt, Gleiches gilt für eine obere Distanzplatte 82, die genauso wie eine untere Distanzplatte 83 zwischen der vorderen und der hinteren Platte 79, 78 angeordnet ist, so dass zwischen den Distanzplatten 82, 83 ein Durchlass 84 frei bleibt.

Durch diesen Durchlass 84 wird das Rastteil 73 hindurch gesteckt, das sich nach dem Durchstecken mit seinem verdickten Kopf 85 gegenüber den Distanzplatten 82, 83 verkeilt.

Auf diese Weise ergibt sich eine feste steckbare Verbindung, die jedoch durch einfache Manipulation wieder gelöst werden kann.

Im Bereich der Schwerter 72, 77 sind die horizontale Lamelle 66 und die vertikale Lamelle 74 noch gegeneinander abgedichtet, wozu die Abdecklamelle 67 in einen quer zum Schwert 72 verlaufenden Steg 86 übergeht, während die Abdecklamelle 75 im Bereich des Schwertes 77 abgekantet ist. Auf diese Weise verlaufen die Stege 86, 87 parallel zueinander und übergreifen einander so, dass eine Labyrinthdichtung 88 entsteht.

Figur 8 zeigt ferner - wie schon Figur 2 -, dass die vertikale Lamelle 74 auf der Führungsschiene 45 geführt ist, wozu in dem Träger 76 ein dachförmiger Ausschnitt 89 gebildet ist, der verhindert, dass die Lamelle 74 in Figur 8 seitlich, also in γ-Richtung, verschwenkt werden kann.

Als weiteres Gegenlager für die Lamellen 66 und 64 dient die bereits aus Figur 2 bekannte Auflagefläche 52, die in einer hier schematisch gezeigten Vorderwand 91 der Verkleidung 11 vorgesehen ist.

Auf diese Weise stützen sich die bereits in sich sehr steifen Lamellenbälge 43 und 44 einerseits auf der Führungsschiene 45 und andererseits auf der Auflagefläche 52 ab, wobei die steckbare Verbindung zwischen den einzelnen Lamellen 66, 74 durch die Schwerter 72, 77 erreicht wird. Wegen der Labyrinthdichtung 88 ist für eine vollständige Verkapselung des Arbeitsraumes 17 gesorgt.

## Patentansprüche

1. Werkzeugmaschine mit einem Arbeitsraum (17), in dem eine Vorrichtung (15) zum Aufnehmen von zu bearbeitenden Werkstücken (16) vorgesehen ist, mit einer Arbeitsspindel (18) zur Bearbeitung der Werkstücke (16), und einem die Arbeitsspindel (18) tragenden Ständer (37), der relativ zu der Vorrichtung (15) in einer auf diese zu weisende Querrichtung (y) verfahrbar ist, wobei der Arbeitsraum nach unten zumindest teilweise durch eine in der Querrichtung (y) verschiebbare, bewegliche Abdeckung (31) abgedeckt ist, die mit dem Ständer (37) verbunden ist, **dadurch gekennzeichnet, dass** die Abdeckung (31) in Schienen geführt ist und mit dem Ständer (37) über einen Hebel (59) verbunden ist, der gelenkig sowohl mit der Abdeckung (31) als auch mit den Ständern (37) verbunden ist.

2. Werkzeugmaschine nach Anspruch 1, **dadurch gekennzeichnet, dass** die Abdeckung (31) eine Gliederschürze (54) ist, die in seitlich offenen U-Schienen (55) geführt ist.

3. Werkzeugmaschine nach Anspruch 2, **dadurch gekennzeichnet, dass** die Gliederschürze (54) im Bereich des Hebels (59) seitliche Schutzbleche (61) aufweist, zwischen denen eine starre Schutzabdeckung (62) vorgesehen ist, und die gelenkig mit einer weiteren Schutzabdeckung (63) verbunden sind, die anderen Endes gelenkig mit dem Ständer (37) an dessen Vorderkante verbunden ist.

4. Werkzeugmaschine nach einem der Ansprüche 1 bis 3, **dadurch gekennzeichnet, dass** die Abdeckung (31) eine starre vordere Abdeckung (56) aufweist, die geschwungen nach unten und vorne verläuft und unmittelbar unterhalb der Schienen (55) angeordnet ist, so dass sich die Gliederschürze (54) beim Verfahren des Ständers (37) über die vordere Abdeckung (56) schiebt.

5. Werkzeugmaschine nach Anspruch 4, **dadurch gekennzeichnet, dass** die Gliederschürze (54) an ihrem freien vorderen Ende eine Abstreiferleiste (57) aufweist, die in Anlage mit der vorderen Abdeckung (56) ist.

6. Werkzeugmaschine nach einem der Ansprüche 1 bis 5, **dadurch gekennzeichnet, dass** der Ständer (37) auf einem Schlitten (34) angeordnet ist, der in einer Längsrichtung (x) orthogonal zur Querrichtung (y) verfahrbar ist.

7. Werkzeugmaschine nach einem der Ansprüche 1 bis 6, **dadurch gekennzeichnet, dass** an dem Ständer (37) ein die Arbeitsspindel (18) tragender Spindelstock (19) gelagert ist, der an dem Ständer (37) orthogonal (z) zur Querrichtung (y) höhenverstellbar gelagert ist.

8. Werkzeugmaschine nach Anspruch 6 oder 7, **dadurch gekennzeichnet, dass** an beiden Seiten des Schlittens (34) jeweils eine Wange (23, 24) befestigt ist, zwischen denen der Ständer (37) verfahrbar ist, der vorzugsweise gegenüber den Wangen (23, 24) über ein Abstreiferblech (42) abgedichtet ist.

9. Werkzeugmaschine nach Anspruch 8, **dadurch gekennzeichnet, dass** die Abdeckung (31) zwischen den Wangen (23, 24) geführt ist und den Ständer (37) und dessen Führung (38) zumindest zum Teil abdeckt.

10. Werkzeugmaschine nach Anspruch 9, **dadurch gekennzeichnet, dass** die Schienen, vorzugsweise die seitlich offenen U-Schienen (55) an den Wangen (23, 24) vorgesehen sind.

11. Werkzeugmaschine nach einem der Ansprüche 6 bis 10, **dadurch gekennzeichnet, dass** die vordere Abdeckung (56) vor dem Schlitten (34) geschwungen nach unten und vorne verläuft

12. Werkzeugmaschine nach einem der Ansprüche 7 bis 11, **dadurch gekennzeichnet, dass** an dem Ständer (37) eine vertikale Rolloabdeckung (29) vorgesehen ist, die mit dem Spindelstock (19) verbunden ist und dessen Führung abdeckt.

13. Werkzeugmaschine nach Anspruch 12, **dadurch gekennzeichnet, dass** die Rolloabdeckung (29) einen an dem Spindelstock (19) angeordneten Rollokasten (28) aufweist, in dem sich die Rolloabdeckung (29) aufwickelt, die mit ihrem freien unteren Ende an einer unteren Kante des Ständers (37) befestigt ist.

14. Werkzeugmaschine nach einem der Ansprüche 6 bis 13, **dadurch gekennzeichnet, dass** an dem Schlitten (34) auf jeder seiner Seiten je eine in Längsrichtung (x) längenveränderliche Abdeckung (25) für den Arbeitsraum (17) vorgesehen ist, die mit ihrem jeweiligen ersten Ende mit dem Schlitten (34) und mit ihrem jeweiligen zweiten Ende mit einer Seitenwand (21, 22; 51) des Arbeitsraumes (17) verbunden ist, wobei jede längenveränderliche Abdeckung (25) jeweils eine hintere Wand (26) sowie ein Dach (27) aufweist.

15. Werkzeugmaschine nach Anspruch 14, **dadurch gekennzeichnet, dass** das Dach (27) lösbar, vorzugsweise steckbar mit der hinteren Wand (26) verbunden ist.

16. Werkzeugmaschine nach Anspruch 8 und 15, **dadurch gekennzeichnet, dass** die hintere Wand (26) und das Dach an den Wangen (23, 24) befestigt sind.

17. Werkzeugmaschine nach einem der Ansprüche 14 bis 16, **dadurch gekennzeichnet, dass** die hintere Wand (26) einen vertikalen Lamellenbalg (44) aus ineinanderschiebbaren Lamellen (74) aufweist.

18. Werkzeugmaschine nach einem der Ansprüche 14 bis 17, **dadurch gekennzeichnet, dass** das Dach (27) einen horizontalen Lamellenbalg (43) aus ineinanderschiebbaren Lamellen (66) aufweist.

19. Werkzeugmaschine nach Anspruch 17 oder 18, **dadurch gekennzeichnet, dass** jede Lamelle (66, 74) eine vorzugsweise aus Metall gefertigte Abdecklamelle (67, 75) und einen Träger (68, 76) aufweist, der im Wesentlichen quer zu der Abdecklamelle (67, 74) verläuft.

20. Werkzeugmaschine nach einem der Ansprüche 17 bis 19, **dadurch gekennzeichnet, dass** je eine Lamelle (66, 74) des vertikalen und des horizontalen Lamellenbalgs (44, 43) steckbar miteinander verbunden sind.

21. Werkzeugmaschine nach Anspruch 20, **dadurch gekennzeichnet, dass** jede Lamelle (66, 74) ein im Wesentlichen quer zu der Abdecklamelle (67, 75) verlaufendes Schwert (72, 77) aufweist, das mit dem Träger (68, 76) verbunden ist, und über das die Lamelle (66, 74) mit der jeweils anderen Lamelle zusammengesteckt ist.

22. Werkzeugmaschine nach Anspruch 21, **dadurch gekennzeichnet, dass** das Schwert (77) der vertikalen Lamellen (74) zwei Platten (78, 79) und das Schwert (72) der horizontalen Lamellen (66) ein Rastteil (73) aufweist, das zwischen die Platten (78, 79) gesteckt ist.

23. Werkzeugmaschine nach einem der Ansprüche 14 bis 22, **dadurch gekennzeichnet, dass** zwischen der hinteren Wand (26) und dem Dach (27) eine Labyrinthdichtung (88) ausgebildet ist.

24. Werkzeugmaschine nach Anspruch 23, **dadurch gekennzeichnet, dass** die Labyrinthdichtung (88) zwei zueinander parallele Stege (86, 87) umfasst, von denen einer an der hinteren Wand (26) und der andere an dem Dach (27) vorgesehen ist.

25. Werkzeugmaschine nach einem der Ansprüche 14 bis 24, **dadurch gekennzeichnet, dass** das Dach (27) an seiner freien Vorderseite gleitend auf einer Auflagefläche (52) einer vorderen Wand des Arbeitsraumes, vorzugsweise einer vorderen Wand (91) einer die Werkzeugmaschine (10) nach außen abschließenden Kabine (11) aufliegt.

26. Werkzeugmaschine nach einem der Ansprüche 14 bis 25, **dadurch gekennzeichnet, dass** die hintere Wand (26) an ihrer unteren Kante (89) gleitend an einer Führungsschiene (45) geführt ist.

27. Werkzeugmaschine nach Anspruch 26, **dadurch gekennzeichnet, dass** die Führungsschiene (45) die hintere Wand (26) in zwei Richtungen (y, z) führt, die orthogonal zueinander und zur Längsrichtung (x) verlaufen.

28. Werkzeugmaschine nach Anspruch 27, **dadurch gekennzeichnet, dass** die Führungsschiene (45) in Längsrichtung gesehen einen dachförmigen Querschnitt (46) aufweist, den die Wand (26) mit ihrer unteren Kante (89) von oben übergreift.

## Claims

1. A machine tool, having a work space (17) in which a device (15) for accommodating work pieces (16) to be machined is provided, having a work spindle (18) for machining the work pieces (16), and having a column (37) which carries the work spindle (18) and is traversable in a transverse direction (y) relative to the device (15) and pointing towards the device (15), whereby the work space is at least partly covered at the bottom by a cover (31) variable in length in the transverse direction (y), said cover being connected to the column (37), **characterized in that** the cover (31) is guided in rails and connected to the column (37) via a lever (59) which is connected in articulated manner to both the cover (31) and the column (37).

2. The machine tool of claim 1, **characterized in that** the cover (31) is a link apron (54) guided in laterally open U-shaped rails (55).

3. The machine tool of claim 1, **characterized in that** the link apron (54) has, in the region of the lever (59), lateral protective plates (61), between which a rigid protective cover (62) is provided and which is connected in an articulated manner to a further protective cover (63), which at its other end is connected in an articulated manner to the column (37) at the front edge thereof.

4. The machine tool of anyone of claims 1 to 3, **characterized in that** the cover (31) has a rigid front cover (56) which runs downwards and forwards in a curved manner and is arranged directly below the rails (55), such that the link apron (54) moves over the front cover (56) during traverse of the column (37).

5. The machine tool of claim 4, **characterized in that** the link apron (54) has, at its free front end, a wiper strip (57) which is in contact with the front cover (56).

6. The machine tool of anyone of claims 1 to 5, **characterized in that** the column (37) is arranged on a slide (34) that is traversable in a longitudinal direction (x) transverse to the transverse direction (y).

7. The machine tool of anyone of claims 1 to 6, **characterized in that** a head stock (19) carrying the work spindle (18) is mounted on the column (37), which head stock is mounted on the column (37) in a traversable manner orthogonal (z) to said transverse direction (y), which head stock is traversable in height.

8. The machine tool of claim 6 or claim 7, **characterized in that** a respective cheek (23, 24) is fastened on both sides of the slide (34), the column (37) being traversable between the cheeks (23, 24) and being preferably sealed off from the cheeks (23, 24) via a wiper plate (42).

9. The machine tool of claim 8, **characterized in that** the cover (31) is guided between the cheeks (23, 24), and at least partly covers the column (37) and its guide (38).

10. The machine tool of claim 9, **characterized in that** the rails, preferably the laterally open U-shaped rails are provided at the cheeks (23, 24).

11. The machine tool of anyone of claims 6 to 10, **characterized in that** the front cover (56), in front of the slide (34), runs downwards and forwards in a curved manner.

12. The machine tool of anyone of claims 7 to 11, **characterized in that** a vertical roll-up cover (29) is provided on the column (37), which roll-up cover is connected to the head stock (19) and covers its guides.

13. The machine tool of claim 12, **characterized in that** the roll-up cover (29) comprises a roll-up canister (28) which is arranged on the head stock (19) and in which the roll-up cover (29) is wound up, which roll-up cover is fastened with its free bottom end to a bottom edge of the column (37).

14. The machine tool of anyone of claims 6 to 13, **characterized in that** on the slide (34), on each of its sides, a respective cover (25), variable in length in the longitudinal direction (x), for the work space (17) is provided, said cover being connected with its respective first end to the slide (34) and with its respective second end to a side wall (21, 22; 51) of the work space (17), each cover (25) variable in length having a respective rear wall (26) and a respective top (27).

15. The machine tool of claim 14, **characterized in that** the top (27) is connected to the rear wall (26) in a detachable, preferably in a push-in manner.

16. The machine tool of claim 8 and claim 15, **characterized in that** the rear wall (26) and the top are connected to the cheeks (23, 24).

17. The machine tool of anyone of claims 14 to 16, **characterized in that** the rear wall (26) comprises a vertical lamella bellows (44) of telescopic lamellae (74).

18. The machine tool of anyone of claims 14 to 17, **characterized in that** the top (27) comprises a horizontal lamella bellows (43) of telescopic lamellae (66).

19. The machine tool of claim 17 or 18, **characterized in that** each lamella (66, 74) comprises a cover lamella (67, 75), preferably produced from metal, and a support (68, 76) which runs essentially transversely to the cover lamella (67, 74).

20. The machine tool of anyone of claims 17 to 19, **characterized in that** each a lamella (66, 74) of the vertical and the horizontal lamella bellows (44, 43) are connected to one another in a push-in manner.

21. The machine tool of claim 20, **characterized in that** each lamella (66, 74) comprises a tongue (72, 77) which runs essentially transversely to the cover lamella (67, 75) and which is connected to the support (68, 76) and via which the lamella (66, 74) is fitted with the respective other lamella.

22. The machine tool of claim 21, **characterized in that** the tongue (77) of the vertical lamellae (74) comprises two blades (78, 77), and that the tongue (72) of the horizontal lamellae (66) has a latching part (73) which is pushed in between the plates (78, 79).

23. The machine tool of anyone of claims 14 to 22, **characterized in that** between the rear wall (26) and the top (27) a labyrinth seal (88) is formed.

24. The machine tool of claim 23, **characterized in that** the labyrinth seal (88) comprises two webs (86, 87) which are parallel to one another and of which one is provided on the rear wall (26) and the other on the top (27).

25. The machine tool of anyone of claims 14 to 24, **characterized in that** the top (27) at its free front side rests in a sliding manner on a bearing surface (52) of the front wall of the work space, preferably a front wall (91) of a booth (11) closing off the machine tool (10) to the outside.

26. The machine tool of anyone of claims 14 to 25, **characterized in that** the rear wall (26) at its lower edge (89) is guided in a sliding manner at a guide rail (45).

27. The machine tool of claim 26, **characterized in that** the guide rail (45) guides the rear wall (26) in two directions (y, z), which are orthogonal to each other and to said longitudinal direction (x).

28. The machine tool of claim 27, **characterized in that** the guide rail (45), as viewed in longitudinal direction, has a roof-shaped cross section (46), the wall (26) overlapping the cross section from above with its bottom edge (89).

## Revendications

1. Machine-outil avec un compartiment de travail (17) où est prévu un dispositif (15) pour le logement de pièces (16) à usiner, avec une broche de travail (18) pour l'usinage des pièces (16), et un montant (37) supportant la broche de travail (18), lequel est déplaçable relativement au dispositif (15) dans une direction transversale (y) allant vers celui-ci, le compartiment de travail étant recouvert au moins partiellement vers le bas par un volet (31) mobile, déplaçable dans la direction transversale (y) et qui est raccordé au montant (37), **caractérisée en ce que** le volet (31) coulisse dans des rails et est raccordé au montant (37) par un levier (59) qui est raccordé de manière articulée au volet (31) ainsi qu'aux montants (37).

2. Machine-outil selon la revendication 1, **caractérisée en ce que** le volet (31) est un rideau articulé (54) qui coulisse dans des rails latéraux ouverts en U (55).

3. Machine-outil selon la revendication 2, **caractérisée en ce que** le rideau articulé (54) comporte des plaques de protection (61) latérales au niveau du levier (59), entre lesquelles est prévu un volet de protection (62) rigide, et qui sont raccordées de manière articulée à un autre volet de protection (63), lequel est à l'autre extrémité raccordé de manière articulée au montant (37), sur le bord avant de celui-ci.

4. Machine-outil selon l'une des revendications 1 à 3, **caractérisée en ce que** le volet (31) comporte un volet avant (56) rigide, lequel s'étend courbé vers le bas et vers l'avant et est disposé directement sous les rails (55), si bien que le rideau articulé (54) glisse sur le volet avant (56) lors du déplacement du montant (37).

5. Machine-outil selon la revendication 4, **caractérisée en ce que** le rideau articulé (54) comporte une baguette racleuse (57) à son extrémité avant libre, laquelle est appliquée contre le volet avant (56).

6. Machine-outil selon l'une des revendications 1 à 5, **caractérisée en ce que** le montant (37) est disposé sur un chariot (34) déplaçable dans une direction longitudinale (x) orthogonale à la direction transversale (y).

7. Machine-outil selon l'une des revendications 1 à 6, **caractérisée en ce qu'**une tête porte-broche (19) supportant la broche de travail (18) est disposée sur le montant (37), laquelle est réglable en hauteur sur le montant (37) orthogonalement (z) à la direction transversale (y).

8. Machine-outil selon la revendication 6 ou 7, **caractérisée en ce qu'**une joue (23, 24) est fixée sur chacun des deux côtés du chariot (34), le montant (37) étant déplaçable entre les joues et de préférence séparé des joues (23, 24) par une plaque racleuse (42).

9. Machine-outil selon la revendication 8, **caractérisée en ce que** le volet (31) est guidé entre les joues (23, 24), et recouvre au moins partiellement le montant (37) et son guidage (38).

10. Machine-outil selon la revendication 9, **caractérisée en ce que** les rails, de préférence les rails latéraux ouverts en U (55), sont prévus sur les joues (23, 24).

11. Machine-outil selon l'une des revendications 6 à 10, **caractérisée en ce que** le volet avant (56) s'étend devant le chariot (34), courbé vers le bas et vers l'avant.

12. Machine-outil selon l'une des revendications 7 à 11, **caractérisée en ce qu'**un volet roulant vertical (29) est prévu sur le montant (37), lequel est raccordé à la tête porte-broche (19) et recouvre le guidage de celle-ci.

13. Machine-outil selon la revendication 12, **caractérisée en ce que** le volet roulant (29) comporte un caisson de store (28) disposé sur la tête porte-broche (19), dans lequel s'enroule le volet roulant (29) fixé par son extrémité inférieure libre à un bord inférieur du montant (37).

14. Machine-outil selon l'une des revendications 6 à 13, **caractérisée en ce qu'**un volet (25) de longueur variable dans la direction longitudinale (x) est prévu pour le compartiment de travail (17) sur le chariot (34), sur chacun des côtés de celui-ci, ledit volet étant raccordé par sa première extrémité au chariot (34), et par sa deuxième extrémité à une paroi latérale (21, 22 ; 51) du compartiment de travail (17), chaque volet (25) de longueur variable comportant une paroi arrière (26) ainsi qu'un toit (27).

15. Machine-outil selon la revendication 14, **caractérisée en ce que** le toit (27) est raccordé à la paroi arrière (26) de manière amovible, de préférence par insertion.

16. Machine-outil selon les revendications 8 et 15, **caractérisée en ce que** la paroi arrière (26) et le toit sont fixés sur les joues (23, 24).

17. Machine-outil selon l'une des revendications 14 à 16, **caractérisée en ce que** la paroi arrière (26) comporte un soufflet vertical à lamelles (44), formé de lamelles (74) insérables l'une dans l'autre.

18. Machine-outil selon l'une des revendications 14 à 17, **caractérisée en ce que** le toit (27) comporte un soufflet horizontal à lamelles (43), formé de lamelles (66) insérables l'une dans l'autre.

19. Machine-outil selon la revendication 17 ou 18, **caractérisée en ce que** chaque lamelle (66, 74) comporte une lamelle de couverture (67, 75) fabriquée de préférence en métal, et un support (68, 76) qui s'étend sensiblement perpendiculairement à la lamelle de couverture (67, 74).

20. Machine-outil selon l'une des revendications 17 à 19, **caractérisée en ce qu'**une lamelle (74) du soufflet vertical à lamelles (44) et une lamelle (66) du soufflet horizontal à lamelles (43) sont raccordées entre elles par insertion.

21. Machine-outil selon la revendication 20, **caractérisée en ce que** chaque lamelle (66, 74) comporte une lame (72, 77) s'étendant sensiblement perpendiculairement à la lamelle de couverture (67, 75), qui est raccordée au support (68, 76) et au moyen de laquelle la lamelle (66, 74) est assemblée à l'autre lamelle correspondante.

22. Machine-outil selon la revendication 21, **caractérisée en ce que** l'aile (77) des lamelles verticales (74) comporte deux plaques (78, 79), et l'aile (72) des lamelles horizontales (66) comporte une pièce d'enclenchement (73) fichée entre les plaques (78, 79).

23. Machine-outil selon l'une des revendications 14 à 22, **caractérisée en ce qu'**un joint d'étanchéité à labyrinthe (88) est formé entre la paroi arrière (26) et le toit (27).

24. Machine-outil selon la revendication 23, **caractérisée en ce que** le joint d'étanchéité à labyrinthe (88) comprend deux ailes (86, 87) parallèles l'une à l'autre, dont l'une est prévue sur la paroi arrière (26) et l'autre sur le toit (27).

25. Machine-outil selon l'une des revendications 14 à 24, **caractérisée en ce que** le toit (27) repose en coulissant par son côté avant libre sur une surface d'appui (52) d'une paroi avant du compartiment de travail, de préférence d'une paroi avant (91) d'une cabine (11) fermant la machine-outil (10) vers l'extérieur.

26. Machine-outil selon l'une des revendications 14 à 25, **caractérisée en ce que** la paroi arrière (26) coulisse sur un rail de guidage (45) par son bord inférieur (89).

27. Machine-outil selon la revendication 26, **caractérisée en ce que** le rail de guidage (45) guide la paroi arrière (26) dans deux directions (y, z) qui s'étendent orthogonalement l'une à l'autre et à la direction longitudinale (x).

28. Machine-outil selon la revendication 27, **caractérisée en ce que** le rail de guidage (45) vu en direction longitudinale présente une section transversale en forme de toit (46), que recouvre par le haut le bord inférieur (89) de la paroi (26).
